# EUROPÄISCHE PATENTSCHRIFT

(11) **EP 2 347 502 B1**
(45) Veröffentlichungstag und Bekanntmachung des Hinweises auf die Patenterteilung: **26.11.2014**
(21) Anmeldenummer: 09749064.3
(22) Anmeldetag: 30.10.2009
(51) Int. Cl.: H02P 1/46, H02P 25/02, H02P 6/08

(54) **VERFAHREN ZUM BETRIEB VON SYNCHRONMOTOREN UND ZUGEHÖRIGE EINRICHTUNG**
METHOD FOR OPERATING SYNCHRONOUS MOTORS UND RELATED APPARATUS
PROCEDE POUR FAIRE FONCTIONNER DES MOTEURS SYNCHRONES ET DES APPAREILS ASSOCIÉS

(30) Priorität: 17.11.2008 DE 102008057701
(43) Veröffentlichungstag der Anmeldung: 27.07.2011
(73) Patentinhaber: Siemens Aktiengesellschaft, 80333 München (DE)
(72) Erfinder: BENECKE, Marcel, 39108 Magdeburg (DE); RUNGGALDIER, Diethard, 96135 Stegaurach (DE)
(86) Internationale Anmeldenummer: PCT/EP2009/064372
(87) Internationale Veröffentlichungsnummer: WO 2010/054940

(56) Entgegenhaltungen:
- EP-A2- 1 667 319
- DE-C1- 19 641 832
- JP-A- 55 111 688
- US-A1- 2003 146 722

## Beschreibung

Die Erfindung betrifft ein Verfahren und eine zugehörige Einrichtung zum Betrieb von Synchronmotoren mit dreiphasigen Drehstromstellern, die an ein Drehstromnetz, bevorzugt ohne Verbindung der Sternpunkte von Ständerwicklung des Synchronmotors und Drehstromnetzes, angeschlossen sind und die wenigstens drei Paare von Halbleiterschaltelementen, beispielsweise antiparallel geschalteter Thyristoren, umfassen, die zu bestimmten Zeitpunkten gezündet werden. Im Dokument US 2003146722 wird der Betrieb eines Drehstrommotors an einem Drehstromsteller mit verschiedenen Frequenzen beschrieben.

Drehstromsynchronmotoren ohne Anlaufkäfig sind prinzipbedingt an die Frequenz des speisenden Drehstromnetzes gebunden. Ein Anlauf, also Hochfahren solcher Motoren ist daher nicht direkt am Netz möglich. Vielmehr ist zwischen dem Drehstromnetz und der Synchronmaschine eine Einrichtung nötig, die eine Spannung variabler Frequenz erzeugt. Hierzu wird üblicherweise ein Frequenzumrichter verwendet. Der Frequenzumrichter besteht aus einem Gleichrichter, einem Zwischenkreis(-kondensator) und einem Wechselrichter.

Es ist Aufgabe der Erfindung, ein Verfahren und eine Einrichtung anzugeben, mit dem bei sehr geringem Aufwand an leistungselektronischen Bauelementen ein Betrieb einer Synchronmaschine an einem Drehstromnetz ermöglicht wird. Dabei soll insbesondere auch das Anlaufen der Synchronmaschine ermöglicht werden.

Die Aufgabe wird durch ein Betriebsverfahren gemäß Anspruch 1 gelöst. Weiterbildungen sind in den abhängigen Ansprüchen angegeben. Eine zugehörige Einrichtung zur Steuerung eines Synchronmotors entsprechend dem erfindungsgemäßen Verfahren ist in Anspruch 12 angegeben.

Bei dem erfindungsgemäßen Verfahren zum Betrieb eines Synchronmotors wird ein dreiphasiger Drehstromsteller verwendet. Der Drehstromsteller ist an ein Drehstromnetz angeschlossen. Die Sternpunkte der Ständerwicklung des Synchronmotors und des Drehstromnetzes sind dabei bevorzugt nicht verbunden. Der Drehstromsteller umfasst zumindest drei Halbleiterschaltelemente, zweckmäßig einen davon pro Phase. Bei den Halbleiterschaltelementen kann es sich beispielsweise um Wechselstromsteller handeln, beispielsweise als drei Paare antiparallel geschalteter Thyristoren. Die Wechselstromsteller werden zu bestimmten Zeitpunkten aktiviert bzw. gezündet, d.h. leitend geschaltet. Bei Thyristoren ist dabei vorteilhaft, dass diese selbst beim Nulldurchgang des Stroms abschalten. Es könnten aber auch IGBTs oder andere Typen von Halbleiterschaltern verwendet werden.

Bei dem erfindungsgemäßen Verfahren werden mehrere Schritte ausgeführt. Es wird dabei eine sinusförmige erste Grundwelle einer Frequenz definiert, wobei die Frequenz unter Berücksichtigung der Polpaarzahl der gewünschten Drehzahl des Motors entspricht. Zusätzlich werden zwei weitere Grundwellen der gleichen Frequenz definiert. Die weiteren Grundwellen sind zur ersten Grundwelle phasenverschoben. Dabei bestehen für die Frequenz wenigstens zwei Möglichkeiten, die einzeln oder in zeitlicher Abfolge auftreten:
a) die Frequenz ist gleich der Frequenz der Netzspannung und die weiteren Grundwellen sind zur Grundwelle um 120° bzw. 240° phasenverschoben. Die Grundwellen bilden also in Bezug auf ihre Phasenlage ein "normales" Drehstromsystem.
b) die Frequenz ist gleich der halben Frequenz der Netzspannung. Weiterhin weisen die Grundwellen eine gegenüber der Drehstrom-Phasenverschiebung von 120° bzw. 240° veränderte Phasenverschiebung zueinander auf. Beispielsweise weisen zwei der Grundwellen zueinander eine Phasenverschiebung von 180° auf, während die dritte Grundwelle zur ersten Grundwellen eine Phasenverschiebung von 240° aufweist.

Weiterhin werden Zündzeitpunkte ausgewählt und zur Zündung der Thyristoren verwendet, an denen die Zündung zur gleichen Zeit für zwei der Phasen einen Strom gleicher Polarität wie die der jeweiligen Phase zugeordnete Grundwelle verursachen würde, wobei die Zündzeitpunkte einen bestimmten Zündwinkel nach dem jeweiligen Nulldurchgang der Netzspannung liegen. Mit dem Zündwinkel ist also hier der Abstand zum vorhergehenden Nulldurchgang gemeint.

Beispielsweise können bei der Erfindung zuerst alle potentiell möglichen Zündzeitpunkte bestimmt werden, die sich zum Nulldurchgang der verketteten Spannung abzüglich eines Zündwinkels ergeben. Für die Zündung des Thyristorpaares im Auβenleiter A ergeben sich beispielsweise dann potentielle Zündzeitpunkte, wenn sich die Phasenlage des speisenden Netzes um den Zündwinkel vor dem Nulldurchgang der verketteten Spannung U_{AB} oder der verketteten Spannung U_{CA} befindet. Der Zündwinkel liegt dabei betragsmäßig vorzugsweise zwischen 120° und 150°. Dann können von den potentiellen Zündzeitpunkten diejenigen ausgewählt werden, bei denen gleichzeitig zwei potentielle Zündzeitpunkte in zwei der drei Phasen vorliegen. Es werden also mit anderen Worten immer zwei der drei Wechselstromsteller, also Thyristorpaare, gezündet. Dabei ist es für die Thyristorpaare beispielsweise möglich, nur einen von beiden Thyristoren zu zünden. Alternativ können immer beide Thyristoren eines Paars gezündet werden. Dadurch ergibt sich immer ein Stromfluss aus einer der Phasen in die andere jeweilige Phase. Die Grundwellen der beiden zu einem Zeitpunkt verwendeten Phasen weisen also zu diesem Zeitpunkt immer gegensätzliche Polarität auf.

Das beschriebene Verfahren wird insbesondere softwaremäßig realisiert. Es kann daher einfach in bestehenden Drehstromstellern ohne zusätzlichen Aufwand an Bauelementen implementiert werden.

Das erfindungsgemäße Verfahren ist erweiterbar auf weitere Frequenzen für die Grundwellen, wobei die Frequenzen gleich der Netzfrequenz geteilt durch k sind, wobei k≥ 1 ist. Neben der Netzfrequenz und der halben Netzfrequenz können also auch ein Drittel, ein Viertel usw. der Netzfrequenz erzeugt werden. Dabei ist bevorzugt die Phasenlage der ersten Grundwelle derart gestaltet, dass der Nulldurchgang der ersten Grundwelle mit dem der Netzspannung gleichliegt. Die Möglichkeiten für Zündzeitpunkte werden durch die relative Lage der tatsächlichen Netzspannung und der jeweiligen zu erzeugenden Grundwelle für die entsprechende Phase bestimmt, und bei Synchronisation einer der Grundwellen mit der Netzspannung ergeben sich vorteilhaft viele mögliche Zündzeitpunkte.

Besonders vorteilhaft ist das erfindungsgemäße Verfahren, wenn es zum Hochfahren des Synchronmotors auf seine Nenndrehzahl verwendet wird. Dabei kommt bevorzugt eine Folge von wenigstens zwei zweckmäßigerweise ansteigenden Frequenzen zum Einsatz. Beispielsweise könnte zum Hochfahren einer Synchronmaschine eine Folge von Frequenzen verwendet werden, die jeweils der Netzfrequenz geteilt durch einen Teiler k entsprechen, wobei k die folgenden Werte durchläuft: 15, 13, 11, 9, 7, 5, 4, 3, 2, 1. Dabei kommen bevorzugt nicht alle ganzzahligen Werte von k zwischen dem größten Wert und eins zum Einsatz. Allerdings ist es wegen des größeren absoluten Abstands der Frequenzen bei kleinen Teilern k vorteilhaft, wenn zumindest ein Drittel, die Hälfte der Netzfrequenz sowie die Netzfrequenz selbst enthalten sind. Alternativ können zwischen dem größten verwendeten Teiler und dem Teiler k = 1 auch alle ganzzahligen Teiler verwendet werden. In einer weiteren Alternative ist es auch möglich, nicht-ganzzahlige Teiler zu verwenden.

Bei der Umschaltung zwischen zwei Frequenzen, d.h. zwei Synchrondrehzahlen für die Synchronmaschine muss diese in kurzer Zeit die erhöhte Drehzahl erreichen. Dies geht typisch einher mit einem mehr oder weniger starken Pendeln, d.h. einer Variation der Rotordrehgeschwindigkeit um die Synchrondrehzahl und einem damit verbundenen Schwingen des Rotors um seine Soll-Position, die natürlich selbst zeitabhängig ist.

Um das Pendeln zu begrenzen, ist es vorteilhaft, wenn für eine Umschaltung zwischen zwei Frequenzen für die Grundwellen ein Zeitpunkt bestimmt wird, an dem die Umschaltung mit einem möglichst geringen Pendelmoment einhergeht, und zu diesem Zeitpunkt die Umschaltung vorgenommen wird. So kann beispielsweise als Zeitpunkt für das Umschalten zu einer erhöhten Frequenz der Zeitpunkt verwendet werden, zu dem die Winkellage des Rotors seiner Soll-Lage entspricht. Für diese Voraussetzung gibt es zwei Möglichkeiten. Bei der einen ist der Rotor gerade dabei, seine Soll-Lage zu "überholen", d.h. er dreht etwas schneller als die Synchrondrehzahl. Bei der anderen dreht er etwas langsamer und fällt somit gerade zurück. Wird speziell und bevorzugt die erste Möglichkeit verwendet, d.h. eine Umschaltung vorgenommen, wenn der Rotor gerade dabei ist, sein Soll-Winkellage zu überschreiten, so ist die Differenz zwischen seiner aktuellen Drehgeschwindigkeit und der zu erreichenden Drehgeschwindigkeit verringert gegenüber anderen Zeitpunkten. Ein Umschalten zu diesem Zeitpunkt führt zu verringertem Pendeln.

Durch den Betrieb der Synchronmaschine beim Hochfahren weit unter ihrer Nenndrehzahl wird im Stator durch die Rotation des Rotors eine geringere Gegenspannung erzeugt als bei Nennbetrieb. Damit fließen bei nicht reduzierter Speisespannung deutlich erhöhte Strome im Stator. Aus diesem Grund wird beim Hochlauf am Umrichter die Spannung in der Regel proportional zur Frequenz nachgeführt. Beim Betrieb am Drehstromsteller wird bevorzugt durch einen veränderten Phasenanschnitt ebenfalls ein geringerer Spannungseffektivwert an den Klemmen der Maschine erzielt. Dazu wird bevorzugt bei Teilern k > 2 der Zündwinkel der Thyristoren relativ zum Nulldurchgang der Netzspannung so eingestellt, dass der fließende Strom möglichst geringfügig über dem Nennstrom der Synchronmaschine ist. Dazu kann beispielsweise bei allen Teilern k > 4 ein großer Zündwinkel verwendet werden, beispielsweise nur 165°, während bei allen anderen Teilern k = 1...4 ein kleinerer Zündwinkel von beispielsweise 150° verwendet wird.

Eine weitere Verbesserung für das Hochfahren der Synchronmaschine lässt sich erzielen, indem nach einer Umschaltung zu einer erhöhten Frequenz für die Grundwellen die Zündwinkel so eingestellt werden, dass bremsende Drehmomente für den Rotor minimiert werden. Hierzu kann beispielsweise zur Bestimmung des Drehmoments die Lage des Rotors in Bezug auf den Stromraumzeiger ausgewertet werden. Dabei kommt zum Tragen, dass nach dem Umschalten der Frequenz der Grundwellen das Drehstromfeld schneller rotiert als der Rotor. Dieser Effekt ist besonders deutlich bei kleinen Teilern k und am größten bei der Umschaltung von der halben Netzfrequenz zur ganzen Netzfrequenz, d.h. von Teiler k = 2 zu Teiler k = 1, da dann der größte absolute Frequenzsprung, nämlich von der halben Netzfrequenz - auftritt. Speziell bei dieser Umschaltung rotiert anfänglich der Rotor nur etwa halb so schnell wie er müsste. Relativ zur Lage des Rotors durchläuft der Raumzeiger der drehfeldbildenden Statorströme daher anfänglich schnell alle möglichen Winkel, wodurch neben einer Beschleunigung des Rotors auch viele Zeiten auftreten, in denen der Rotor sogar gebremst wird.

Um diesem Problem zu begegnen, kann beispielsweise der Stromraumzeiger bestimmt werden und gleichzeitig die Rotorposition. Zur Bestimmung der Rotorposition kann beispielsweise ein Lagegeber verwendet werden, der in der Synchronmaschine vorgesehen ist. Ist die relative Lage derartig, dass ein positives Drehmoment zu erwarten ist, d.h. eine Beschleunigung des Rotors, wird beispielsweise der Zündwinkel so eingestellt, dass ein starkes Drehmoment erzielt wird. Dies erfolgt durch Wahl eines großen Zündwinkels, beispielsweise 40°. Ein positives Drehmoment wird erzielt, wenn der Stromraumzeiger bezogen auf die Drehrichtung in nicht allzu großem Abstand vor dem Rotor ist, also bezogen auf die Rotorposition im Winkelbereich von beispielsweise 30° liegt. Andersherum wird ein kleiner Steuerwinkel, beispielsweise 15°, mit entsprechend kleiner erzeugter Spannung und kleinem erzeugten Drehmoment gewählt, wenn Rotorwinkel und Stromraumzeiger ungünstig stehen, d.h. wenn der Stromraumzeiger der Rotorposition folgt, also bezogen auf die Rotorposition im Winkelbereich von beispielsweise -60° liegt.

Eine zur Durchführung des beschriebenen Verfahrens ausgestaltete Einrichtung weist einen Drehstromsteller aus drei Wechselstromstellern, also antiparallelen Thyristorpaaren auf. Weiterhin ist eine Steuereinrichtung vorgesehen, die das beschriebene Verfahren ausführen kann. Um die nötigen Eingabewerte zu bekommen, kann beispielsweise eine Spannungsmesseinrichtung zwischen zwei der drei angeschlossenen Phasen vorgesehen sein. Vorteilhaft ist es, wenn eine in der Synchronmaschine vorgesehene Steuereinheit, die heute zweckmäßig als Mikroprozessor realisiert ist, die Steuerung des Drehstromstellers übernimmt. In diesem Fall liegen Daten von beispielsweise einem in der Synchronmaschine integrierten Lagegeber bereits automatisch vor. Weiterhin kann eine solche Synchronmaschine bereits den Drehstromsteller umfassen, also als Gesamteinheit realisiert sein, die somit direkt an ein Drehstromnetz anschließbar ist.

Bevorzugte, jedoch keinesfalls einschränkende Ausführungsbeispiele für die Erfindung werden nunmehr anhand der Zeichnung näher erläutert. Dabei sind die Merkmale schematisiert dargestellt und sich entsprechende Merkmale sind mit gleichen Bezugszeichen markiert. Die Figuren zeigen dabei im Einzelnen:
- Figur 1: eine Einrichtung zur Steuerung eines Synchronmotors mit Anwendung des erfindungsgemäßen Verfahrens,
- Figur 2: Diagramme zur Verdeutlichung der Zündzeitpunkte,
- Figur 3: Diagramme zur Verdeutlichung der Zündzeitpunkte bei halber Netzfrequenz.

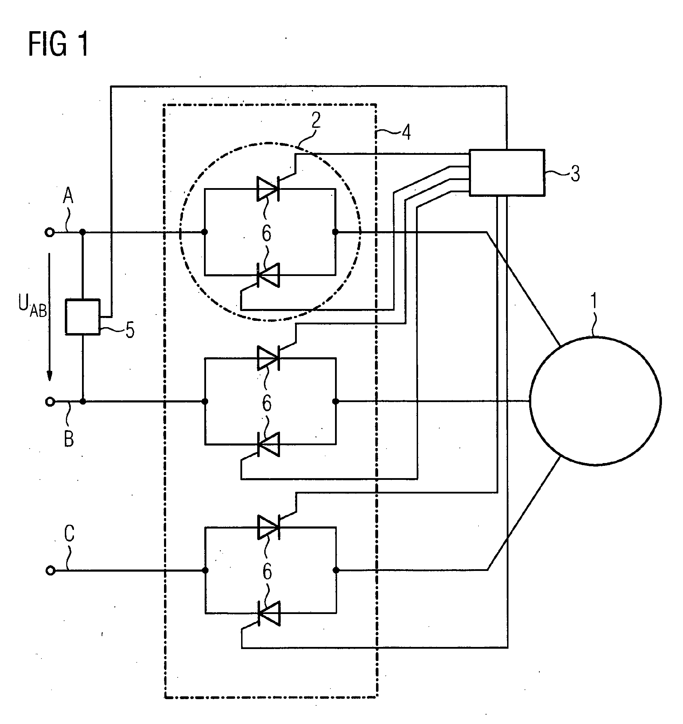

In Figur 1 ist eine Drehstrom-Synchronmaschine 1 über einen dreiphasigen Drehstromsteller 4 an die Phasen A, B, C eines Drehstromnetzes angeschlossen. Jeder der Phasen ist ein Thyristorpaar 2 aus zwei antiparallel geschalteten Thyristoren 6 zugeordnet. Die Zündelektroden der Thyristoren 6 sind an eine Steuereinrichtung 3 angeschlossen, mit der die zum Zünden der Thyristoren 6 erforderlichen Zündsignale in einer vorgegebenen zeitlichen Abfolge bereitgestellt werden. Die Steuereinrichtung 3 steuert auch den Phasenanschnittwinkel. Die Steuereinrichtung 3 wird vorzugsweise durch einen Mikrocontroller realisiert. Zwischen zwei Außenleitern des Netzes, beispielsweise zwischen den Klemmen A und B des Netzes in Figur 1, ist eine Spannungsmesseinrichtung 5 geschaltet, an deren Ausgang die zwischen diesen beiden Klemmen A und B auftretenden Netzspannung U_{AB} bereitsteht.

In einem ersten Ausführungsbeispiel sind die Steuereinrichtung 3 und der Drehstromsteller 4 eine von der Drehstrom-Synchronmaschine 1 separate Einheit, also als separate Motorsteuereinrichtung realisiert. In einem zweiten Ausführungsbeispiel sind die Steuereinrichtung 3 und der Drehstromsteller 4 Teil der Drehstrom-Synchronmaschine 1. In diesem Fall sind zweckmäßig die Funktionen der Steuereinrichtung 3 in einen bereits vorhandenen Mikroprozessor in der Drehstrom-Synchronmaschine 1 integriert.

In vorliegendem Fall dient die Steuereinrichtung 3 dazu, ein geeignetes Programm zu bearbeiten, mit dem softwaremäßig der Betrieb der Einrichtung erfolgen kann. Dabei liegt ein einheitliches Verfahren zugrunde, mit dem beliebige Teile der Nenndrehzahl der Drehstrom-Synchronmaschine 1 erreicht werden können.

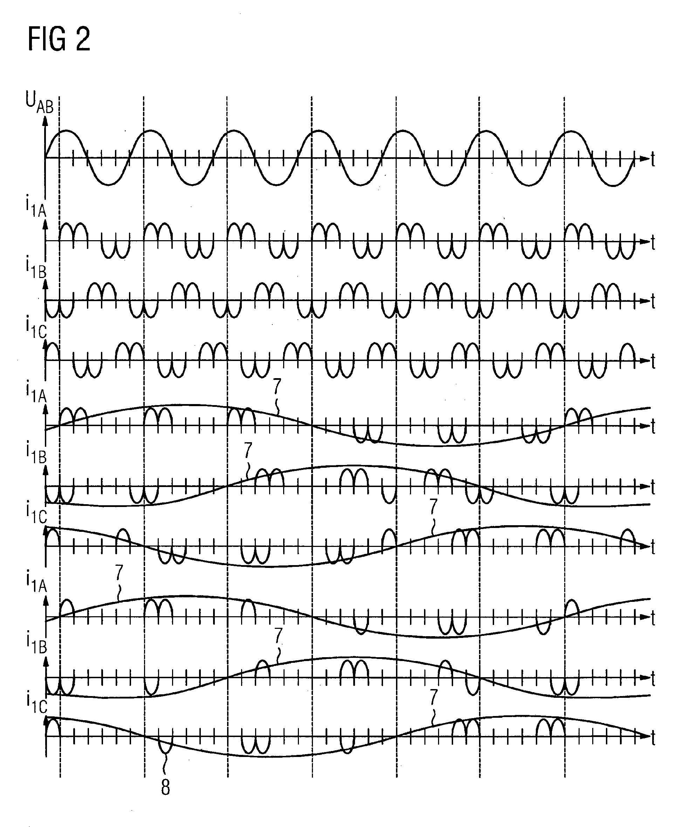

In den Figuren 2 ist die sich ergebende Situation dargestellt, wenn bei einer Drehzahl von 1/6 der Nenndrehzahl eine beispielhafte Ausführungsmöglichkeit für die Erfindung verwendet wird. Dabei zeigt das oberste Teildiagramm einen sinusförmigen Verlauf der Spannung U_{AB} zwischen der ersten und zweiten Phase A, B. Dieser Verlauf zeigt selbstverständlich die Netzfrequenz.

Das zweite, dritte und vierte Teildiagramm zeigt jeweils drei Verläufe für die drei Ströme in den Phasen A, B, C. Dabei deutet das zweite Teildiagramm von oben die möglichen Ströme an, die bei einer Zündung bei allen möglichen Zündzeitpunkten erreichbar wären, wobei die Stromhöhe nur schematisch und immer gleich gezeigt ist. Entsprechend der Eingangsspannung in der jeweiligen Phase sind abwechselnd Paare von Strompulsen 8 in positive und negative Richtung möglich, wobei zwischen den Phasen der übliche Versatz von 120° vorhanden ist.

Nun wird, wie im dritten Teildiagramm von oben gezeigt, in jede der Phasen eine (gedachte) Grundwelle 7 gelegt, wobei diese Grundwelle 7 die Frequenz hat, die der gewünschten Drehzahl für die Drehstrom-Synchronmaschine 1 entspricht. In diesem Fall wird von 1/6 der Netzfrequenz ausgegangen. Zwischen den Grundwellen 7 ist für die einzelnen Phasen der für das Drehstromsystem typische Phasenversatz von 120° gelegt, wobei der Phasenversatz auf die Frequenz der Grundwelle 7 bezogen ist. Das Teildiagramm zeigt nun zusätzlich zu den Grundwellen 7 nur noch die Zündzeitpunkte, bei denen der sich ergebende Stromfluss die gleiche Polarität aufweist wie die Grundwelle 7 zum jeweiligen Zeitpunkt und in der jeweiligen Phase. Hierdurch fallen in etwa die Hälfte der möglichen Zündzeitpunkte weg, da durch einen Stromfluss in die falsche Richtung die Grundwellen 7 nicht synthetisiert werden können.

Das unterste Teildiagramm zeigt nun wiederum für alle drei Phasen A, B, C wiederum die Grundwellen 7. Zusätzlich sind nun nur noch die Strompulse 8 für solche Zündzeitpunkte gezeigt, bei denen zur gleichen Zeit in zwei der drei Phasen ein Strompuls 8 richtiger Polarität erzeugbar ist. Hierdurch fallen nochmals ein Teil der Zündzeitpunkte weg. Die übrigbleibenden und in diesem Teildiagramm gezeigten Zündpulse werden tatsächlich verwendet, wodurch letztlich ein Stromfluss gemäß den Grundwellen 7 synthetisiert wird.

Ist die Frequenz gleich der Hälfte der Netzfrequenz, so ergeben sich bei der Verwendung der standardgemäßen Phasenverschiebungen von 120° und 240° zwischen den Grundwellen 7 für eine der Phasen keine potentiellen Zündzeitpunkte bzgl. einer Stromrichtung. Wird die Synchronmaschine dennoch so betrieben, so wird sie analog zu einer Gleichstrombremsung abgebremst.

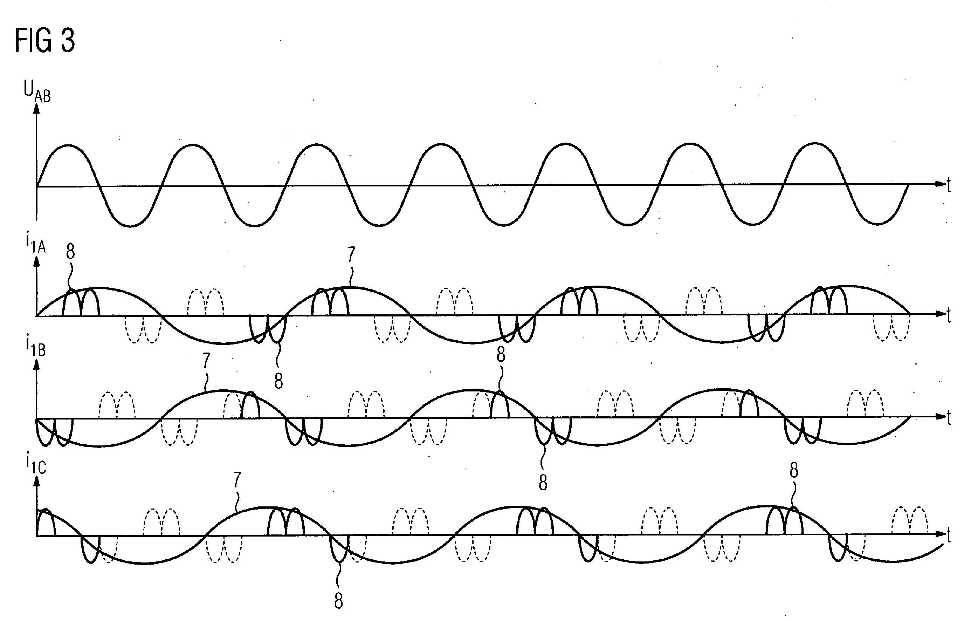

Im Fall halber Netzfrequenz wird daher ein anderes Drehstromsystem erzeugt, indem zwischen zwei der Phasen, beispielsweise den Phasen A und B eine Phasenverschiebung von 180° gewählt wird, wiederum bezogen auf die halbe Netzfrequenz. Dies ist zusammen mit den sich dann ergebenden Zündzeitpunkten in Figur 3 dargestellt. Figur 3 zeigt zur besseren Übersicht auch die Zündpulse in gestrichelter Darstellung, die nicht verwendet werden.

Im Fall der Netzfrequenz als Frequenz für die Grundwellen 7 ist es möglich, die Synchronmaschine ohne Beeinflussung durch die Thyristoren direkt am Netz zu betreiben. Zur Regulierung von Strom und Spannung wird jedoch auch im Nennbetrieb eine Zündsteuerung verwendet. Dabei kann bzgl. der Phasenlage der Grundwellen 7 wieder ein normales Drehstromsystem verwendet werden, also eine Phasenlage von 120° und 240° zueinander.

Zum Hochfahren der Synchronmaschine auf die Nenndrehzahl wird im vorliegenden Ausführungsbeispiel eine Folge von Frequenzen für die Grundwellen 7 verwendet. Eine beispielhafte Folge von Frequenzen wird durch die folgende Tabelle wiedergegeben, in der zu einer Drehzahl in U/min einer beispielhaften Synchronmaschine ein jeweiliger Teiler für die Netzfrequenz angegeben ist, wobei die Frequenz für die Grundwellen 7 dann der Netzfrequenz geteilt durch den Teiler entspricht:

| | | | | | | | | | | |
|---|---|---|---|---|---|---|---|---|---|---|
| Teiler | 15 | 13 | 11 | 9 | 7 | 5 | 4 | 3 | 2 | 1 |
| Drehzahl | 50 | 58 | 68 | 83 | 107 | 150 | 188 | 250 | 375 | 750 |

Dabei ist erkennbar, dass der Sprung in der Drehzahl speziell bei den kleinen Teilern hoch ist. Experimentell zeigt sich, dass beim Umschalten zwischen der halben Netzfrequenz und der Netzfrequenz als Frequenz für die Grundwellen 7 die Synchronmaschine nicht schnell genug beschleunigen kann und letztlich außer Tritt gerät und bremst.

Um diesem Problem zu begegnen, wird in diesem Beispiel eine zusätzliche Regelung verwendet, die dafür sorgt, dass Drehmomente, die einer Beschleunigung des Rotors entgegenwirken, minimiert werden, dass also nach Möglichkeit nach der Umschaltung der Frequenz möglichst nur beschleunigende Drehmomente wirken.

Dazu wird in diesem Beispiel die Lage des Ständerstromraumzeigers im Rotorzeigerdiagramm betrachtet. Um diese bei einer Synchronmaschine zu ermitteln, müssen einerseits die Lage des Rotors und zum anderen der Stromfluss in den Phasen bekannt sein. Hierzu ist beispielsweise eine entsprechende Strommessung vorgesehen. Ferner ist seitens der Drehstrom-Synchronmaschine 1 ein Lagegeber vorgesehen. Ergibt sich aus der Lage des Stromzeigers relativ zur Rotorposition, dass ein positives Drehmoment im Sinne einer Beschleunigung des Rotors zu erwarten ist, so wird in diesem Beispiel der Zündwinkel auf einen Wert αₘᵢₙ gesetzt, beispielsweise αₘᵢₙ = 150°. In anderen Worten werden die Thyristoren 150° nach einem Nulldurchgang der Spannung gezündet. Auch andere Werte für αₘᵢₙ sind verwendbar, beispielsweise 130° oder 110°. Ist jedoch ausgehend von der Lage des Stromzeigers relativ zur Rotorposition ein negatives, also bremsendes Drehmoment zu erwarten, dann wird ein größerer Zündwinkel von beispielsweise αₘₐₓ = 167° gewählt. Bei größerem Zündwinkel fließt insgesamt ein geringerer Strom bis zur Abschaltung des Thyristors und das sich ergebende Drehmoment für den Rotor wird wesentlich geringer.

Die zusätzliche Regelung für die Optimierung des Drehmoments wird vor allem bei der Umschaltung von halber zu ganzer Netzfrequenz verwendet, wirkt aber vorteilhaft bei allen Umschaltungen. Erreicht die Drehzahl des Rotors der Synchronmaschine die Nenndrehzahl, so wird die zusätzliche Regelung für das Drehmoment zweckmäßig abgeschaltet.

Um das Motormoment generell zu erhöhen, kann die Zündung vorgezogen werden, womit für jede Zündung eine längere Stromflusszeit erreicht wird. Beispielsweise kann für die Zündung generell oder für αₘᵢₙein Wert von 140°, 130° oder auch 120° oder weniger verwendet werden.

Weiterhin wird bei Teilern k > 5 ebenfalls auf die Zündwinkel eingewirkt. Die Steuereinrichtung 3 sieht bei entsprechenden Frequenzen, d.h. bei niederen Drehzahlen, geringere Zündwinkel vor. Beispielsweise kann bei Teilern k > 7 ein Wert von αₘᵢₙ = 165° vorgesehen sein, bei Teilern k von 4 bis 7 ein Wert von αₘᵢₙ = 155 und bei k < 4 ein Wert von αₘᵢₙ = 145° . Insgesamt reguliert die Steuereinrichtung 3 also bei allen Teilern zweckmäßig den Wert für den Zündwinkel, einmal in Abhängigkeit von der aktuellen Synchrondrehzahl, also Frequenz der Grundwellen 7, zum anderen in Abhängigkeit des sich momentan ergebenden Drehmoments.

## Patentansprüche

1. Verfahren zum Betrieb einer Synchronmaschine (1) mit einem dreiphasigen Drehstromsteller (4), der an ein Drehstromnetz (A, B, C) angeschlossen ist und wenigstens drei Halbleiterschaltelemente aufweist, die zu bestimmten Zeitpunkten leitend geschaltet werden, mit folgenden Verfahrensschritten:
- Definition einer sinusförmigen Grundwelle (7) einer Frequenz, die der gewünschten Drehzahl der Synchronmaschine (1) entspricht,
- Definition von zwei weiteren Grundwellen (7) der gleichen Frequenz, die zur ersten Grundwelle (7) phasenverschoben sind, wobei
a) in einem ersten Fall die Frequenz gleich der Frequenz der Netzspannung ist und die weiteren Grundwellen (7) zur ersten Grundwelle (7) um 120° bzw. 240° phasenverschoben sind, und
b) in einem zweiten Fall die Frequenz gleich der halben Frequenz der Netzspannung ist, und die Grundwellen (7) zueinander eine gegenüber der Drehstrom-Phasenverschiebung von 120° bzw. 240° veränderte Phasenverschiebung zueinander aufweisen,
wobei die beiden Möglichkeiten für die Frequenz einzeln oder in zeitlicher Abfolge auftreten,
- Auswählen und Verwenden von Zündzeitpunkten zur Zündung, an denen die Zündung zur gleichen Zeit für zwei der Phasen (A, B, C) einen Strom gleicher Polarität wie die der jeweiligen Phase (A, B, C) zugeordnete Grundwelle (7) verursachen würde, wobei die Zündzeitpunkte mit einem bestimmten Zündwinkel nach dem jeweiligen Nulldurchgang der Netzspannung liegen, wobei im zweiten Betriebsfall der halben Frequenz die Zündzeitpunkte so gewählt werden, dass bremsende Drehmomente für den Rotor minimiert werden.

2. Verfahren gemäß Anspruch 1, bei dem bei der halben Frequenz der Netzspannung ein Paar aus den Grundwellen (7) eine Phasenverschiebung von 180° gegeneinander aufweist.

3. Verfahren gemäß Anspruch 1 oder 2, bei dem als Frequenz für die Grundwellen (7) die Netzfrequenz geteilt durch k verwendet wird, wobei k≥ 1 ist.

4. Verfahren gemäß Anspruch 3, bei dem der Nulldurchgang der Grundwelle (7) mit der Netzspannung synchronisiert wird.

5. Verfahren gemäß einem der vorangehenden Ansprüche, bei dem zum Hochfahren der Synchronmaschine (1) auf ihre Nenndrehzahl eine Folge von wenigstens zwei Frequenzen verwendet wird.

6. Verfahren gemäß Anspruch 5, bei dem in der Folge ein Drittel und die Hälfte der Netzfrequenz sowie die Netzfrequenz selbst enthalten ist.

7. Verfahren nach einem der vorhergehenden Ansprüche, bei dem für eine Umschaltung zwischen zwei Frequenzen für die Grundwellen (7) ein Zeitpunkt bestimmt wird, an dem die Umschaltung mit einem möglichst geringen Pendelmoment einhergeht, und zu diesem Zeitpunkt die Umschaltung vorgenommen wird.

8. Verfahren gemäß Anspruch 7, bei dem als Zeitpunkt für das Umschalten zu einer erhöhten Frequenz der Zeitpunkt verwendet wird, zu dem die Winkellage des Rotors seiner Soll-Lage entspricht.

9. Verfahren gemäß einem der Ansprüche 3 bis 7, bei dem der Zündwinkel der Thyristoren (6) relativ zum Nulldurchgang der Netzspannung bei k > 2 so eingestellt wird, dass der fließende Strom möglichst geringfügig über dem Nennstrom der Synchronmaschine (1) ist.

10. Verfahren gemäß einem der vorangehenden Ansprüche, bei dem nach einer Umschaltung zu einer erhöhten Frequenz für die Grundwellen (7) die Zündwinkel so eingestellt werden, dass bremsende Drehmomente für den Rotor minimiert werden.

11. Verfahren gemäß Anspruch 9, bei dem zur Bestimmung des Betrags des Drehmoments die Lage des Rotors in Bezug auf den Stromraumzeiger ausgewertet wird.

12. Einrichtung zum Betrieb einer Synchronmaschine (1), mit
- einem dreiphasigen Drehstromsteller (4), der an ein Drehstromnetz (A, B, C) anschließbar ist und wenigstens drei Paare (2) antiparallel geschalteter Thyristoren (6) umfasst,
- einer Steuereinheit (3) zur Steuerung der Thyristoren (6), die ausgestaltet ist zur Durchführung des Verfahrens gemäß einem der vorangehenden Ansprüche.

13. Einrichtung gemäß Anspruch 12, bei der die Steuereinheit (3) ein bei der Synchronmaschine (1) vorhandener Mikroprozessor ist.

14. Einrichtung gemäß Anspruch 12 oder 13, bei der die Synchronmaschine (1) einen Lagegeber aufweist.

## Claims

1. Method for operation of a synchronous machine (1) having a three-phase polyphase controller (4), which is connected to a polyphase power supply system (A, B, C) and has at least three semiconductor switching elements, which are switched on at specific times, having the following method steps:
- definition of a sinusoidal fundamental (7) at a frequency which corresponds to the desired rotation speed of the synchronous machine (1),
- definition of two further fundamentals (7) at the same frequency, which are phase-shifted with respect to the first fundamental (7), wherein
a) in a first case, the frequency is equal to the frequency of the power supply system voltage, and the further fundamentals (7) are phase-shifted through 120° and 240° with respect to the first fundamental (7), and
b) in a second case, the frequency is equal to half the frequency of the power supply system voltage, and the fundamentals (7) have a phase shift with respect to one another which is not the same as the polyphase phase shift of 120° or 240°,
wherein the two options for the frequency occur individually or in a time sequence,
- selection and use of trigger times for triggering, at which triggering at the same time for two of the phases (A, B, C) would cause a current of the same polarity as the fundamental (7) associated with the respective phase (A, B, C), wherein the trigger times occur at a specific trigger angle after the respective zero crossing of the power supply system voltage, wherein in the second case of operation at half the frequency the trigger times are chosen such that braking torques for the rotor are minimized.

2. Method according to Claim 1, in which a pair of the fundamentals (7) have a phase shift of 180° with respect to one another at half the frequency of the power supply system voltage.

3. Method according to Claim 1 or 2, in which the power supply system frequency divided by k is used as the frequency for the fundamentals (7), where k ≥1.

4. Method according to Claim 3, in which the zero crossing of the fundamental (7) is synchronized with the power supply system voltage.

5. Method according to one of the preceding claims, in which a sequence of at least two frequencies is used to accelerate the synchronous machine (1) to its rated rotation speed.

6. Method according to Claim 5, in which the sequence contains a third and half of the power supply system frequency, as well as the power supply system frequency itself.

7. Method according to one of the preceding claims, in which a time at which switching involves as little oscillating torque as possible is defined for switching between two frequencies for the fundamentals (7), and switching takes place at this time.

8. Method according to Claim 7, in which the time at which the angular position of the rotor corresponds to its nominal position is used as the time for switching to a higher frequency.

9. Method according to one of Claims 3 to 7, in which the trigger angle of the thyristors (6) is set relative to the zero crossing of the power supply system voltage when k > 2 such that the current which flows is as little as possible above the rated current of the synchronous machine (1).

10. Method according to one of the preceding claims, in which, after switching to a higher frequency for the fundamentals (7), the trigger angles are set such that braking torques for the rotor are minimized.

11. Method according to Claim 9, in which the position of the rotor with respect to the current space vector is evaluated in order to determine the magnitude of the torque.

12. Device for operation of a synchronous machine (1), having
- a three-phase polyphase controller (4), which can be connected to a polyphase power supply system (A, B, C) and comprises at least three pairs (2) of thyristors (6) connected back-to-back in parallel,
- a control unit (3) for controlling the thyristors (6), which is designed to carry out the method according to one of the preceding claims.

13. Device according to Claim 12, in which the control unit (3) is a microprocessor provided for the synchronous machine (1).

14. Device according to Claim 12 or 13, in which the synchronous machine (1) has a position transmitter.

## Revendications

1. Procédé pour faire fonctionner une machine ( 1 ) synchrone comprenant un commutateur ( 4 ) triphasé, qui est raccordé à un réseau ( A, B, C ) de courant triphasé, et au moins trois éléments de commutation à semi-conducteur, qui sont passants à des instants déterminés, ayant les stades de procédé suivants :
- définition d'une onde ( 7 ) fondamentale, sinusoïdale d'une fréquence, qui correspond à la vitesse de rotation souhaitée de la machine ( 1 ) synchrone,
- définition de deux autres ondes ( 7 ) fondamentales de la même fréquence, qui sont déphasées par rapport à la première onde ( 7 ) fondamentale, dans lequel
a) dans un premier cas, la fréquence est égale à la fréquence de la tension du réseau et les autres ondes ( 7 ) fondamentales sont déphasées de 120° ou de 240° par rapport à la première onde ( 7 ) fondamentale et
b) dans un deuxième cas, la fréquence est égale à la moitié de la fréquence de la tension du réseau et les ondes ( 7 ) fondamentales ont, l'une par rapport à l'autre, un déphasage modifié de 120° ou de 240° par rapport au déphasage du courant triphasé,
dans lequel les deux possibilités pour la fréquence se produisent individuellement ou successivement dans le temps,
- sélection et utilisation d'instants d'amorçage pour l'amorçage, auxquels l'amorçage aurait provoqué, en même temps pour deux des phases ( A, B, C ), un courant de même polarité que celle de l'onde ( 7 ) fondamentale associée à la phase ( A, B, C ) respective, les instants d'amorçage étant situés à un angle d'amorçage déterminé après le passage par zéro respectif de la tension du réseau, dans lequel, dans le deuxième cas de fonctionnement de la moitié de la fréquence, les instants d'amorçage sont sélectionnés de manière à minimiser des couples de rotation de freinage du rotor.

2. Procédé suivant la revendication 1, dans lequel, à la moitié de la fréquence de la tension du réseau, une paire composée des ondes ( 7 ) fondamentales a, l'une par rapport à l'autre, un déphasage de 180°.

3. Procédé suivant la revendication 1 ou 2, dans lequel on utilise, comme fréquence pour les ondes ( 7 ) fondamentales, la fréquence du réseau divisée par k, k étant supérieur ou égal à 1.

4. Procédé suivant la revendication 3, dans lequel on synchronise le passage par zéro de l'onde ( 7 ) fondamentale avec la tension du réseau.

5. Procédé suivant l'une des revendications précédentes, dans lequel, pour porter la machine ( 1 ) synchrone à sa vitesse de rotation nominale, on utilise une succession d'au moins deux fréquences.

6. Procédé suivant la revendication 5, dans lequel, dans la succession, est contenue une troisième et les moitiés de la fréquence du réseau ainsi que la fréquence du réseau soi-même.

7. Procédé suivant l'une des revendications précédentes, dans lequel, pour une commutation entre deux fréquences, on définit, pour les ondes ( 7 ) fondamentales, un instant où la commutation progresse à un couple oscillant aussi petit que possible et on effectue la commutation à cet instant.

8. Procédé suivant la revendication 7, dans lequel on utilise, comme instant de commutation, vers une élévation de la fréquence, l'instant où la position angulaire du rotor correspond à sa position de consigne.

9. Procédé suivant l'une des revendications 3 à 7, dans lequel on règle l'angle d'amorçage des thyristors ( 6 ) par rapport au passage par zéro de la tension du réseau, pour k > 2, de manière à ce que le courant passant soit aussi peu intense que possible, au dessus du courant nominal de la machine ( 1 ) synchrone.

10. Procédé suivant l'une des revendications précédentes, dans lequel, après une commutation vers une élévation de la fréquence pour les ondes ( 7 ) fondamentales, on règle l'angle d'amorçage, de manière à minimiser des couples de rotation de freinage du rotor.

11. Procédé suivant la revendication 9, dans lequel, pour la détermination de la valeur absolue du couple de rotation, on exploite la position du rotor par rapport au vecteur espace courant.

12. dispositif pour faire fonctionner une machine ( 1 ) synchrone, comprenant
- un commutateur ( 4 ) triphasé, qui peut être raccordé à un réseau ( A, B, C ) de courant triphasé et qui comprend au moins trois paires ( 2 ) de thyristors ( 6 ) montés tête-bêche,
- une unité ( 3 ) de commande des thyristors ( 6 ), qui est conformée pour effectuer le procédé suivant l'une des revendications précédentes.

13. dispositif suivant la revendication 12, dans lequel l'unité ( 3 ) de commande est un microprocesseur présent dans la machine ( 1 ) synchrone.

14. dispositif suivant la revendication 12 ou 13, dans lequel la machine ( 1 ) synchrone a un indicateur de position.
